## Europäisches Patentamt

## European Patent Office

## Office européen des brevets

(19)

(11) Veröffentlichungsnummer: **0 261 100**
**A2**

(12) **EUROPÄISCHE PATENTANMELDUNG**

(21) Anmeldenummer: **87890206.3**

(22) Anmeldetag: **09.09.87**

(51) Int. Cl.⁴: **C 12 H 1/22**

(30) Priorität: **16.09.86 AT 2472/86**

(43) Veröffentlichungstag der Anmeldung:
**23.03.88 Patentblatt 88/12**

(84) Benannte Vertragsstaaten:
**BE CH DE ES FR GB GR IT LI LU NL SE**

(71) Anmelder: **Hinke Gesellschaft m.b.H. & Co. KG**
**Dr. Scheiber-Strasse 28**
**A-4870 Vöcklamarkt (AT)**

(72) Erfinder: **Hinke, Peter**
**Dr. Scheiber-Strasse 28**
**A-4870 Vöcklamarkt (AT)**

**Hinke, Erhard**
**Mörasing 83**
**A-4870 Vöcklamarkt (AT)**

**Aiterbichler, Friedrich**
**Johann-Strauss-Strasse 10**
**A-4870 Vöcklamarkt (AT)**

(74) Vertreter: **Hübscher, Helmut, Dipl.-Ing. et al**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 (AT)**

(54) **Stehender Behälter für die Zwischenlagerung eines Getränkes, insbesondere von Bier.**

(57) Ein stehendern Behälter (1) für die Zwischenlagerung eines Getränkes besteht aus einem Boden (10) mit einem Auslaßtrichter (11) für Absatzstoffe und einem Mantel (2), der mit axialem Abstand voneinander zwei kühlbare Ringzonen (3, 4) aufweist.

Um den gesamten Behälterinhalt ohne Beeinträchtigung durch die Absatzstoffe abziehen zu können. ist der Boden (10) mit einer Kühleinrichtung (12) versehen.

EP 0 261 100 A2

## Beschreibung

### Stehender Behälter für die Zwischenlagerung eines Getränkes, insbesondere von Bier

Die Erfindung bezieht sich auf einen stehenden Behälter für die Zwischenlagerung eines Getränkes, insbesondere von Bier, bestehend aus einem Boden mit einem Auslaßtrichter für Absatzstoffe und aus einem Mantel, der mit axialem Abstand voneinander zwei kühlbare Ringzonen aufweist.

Die Abhängigkeit beispielsweise eines Gärverlaufes von der Temperatur kann vorteilhaft für die Führung eines Gärverfahrens ausgenützt werden. Zu diesem Zweck ist es für die Nachgärung von Bier bekannt, Lagerbehälter vorzusehen, deren Mantel zwei mit axialem Abstand voneinander angeordnete, je für sich einschaltbare Kühlzonen aufweist. Mit Hilfe dieser kühlbaren Ringzonen läßt sich nämlich nicht nur eine Steuerung der Temperatur, sondern auch der Hefebewegung innerhalb des Behälters erreichen, weil die Hefepilze dazu neigen, sich gegen die gekühlten Zonen hin zu verlagern. Es kann folglich bei einer vorteilhaften Verfahrensführung zunächst die obere der beiden Ringzonen des Behältermantels gekühlt werden, um dann beim Abklingen der Nachgärung die obere Kühlzone auszuschalten und die untere Ringzone zu kühlen, so daß sich die Hefe im Bereich der unteren gekühlten Ringzone sammelt und ablagert. Die Kühlung bewirkt außerdem ein Ausflocken von Eiweiß, das eine Trübung bewirkt und die Haltbarkeit des Bieres beeinträchtigt.

Obwohl sich Behälter dieser Art gut bewährt haben, tritt das Problem auf, daß sich im Bereich des mit einem Auslaßstutzen für die Absatzstoffe versehenen, zum Auslaß stutzen hin konisch oder kalottenartig abfallenden Bodens des Behälters unterhalb der gekühlten Ringzone eine Restmenge an Bier befindet, die entsprechende Restmengen an Hefe enthält und eine Eiweißtrübung aufweist. Aufgrund des vergleichsweise großen Volumens dieser Lagerbehälter stellt jedoch dieses in seiner Qualität beeinträchtigte Bier eine wirtschaftlich nicht unerhebliche Menge dar.

Der Erfindung liegt somit die Aufgabe zugrunde, einen Behälter der eingangs geschilderten Art mit einfachen Mitteln so zu verbessern, daß der gesamte Behälterinhalt ohne Beeinträchtigung durch Absatzstoffe aus dem Behälter abgezogen werden kann.

Die Erfindung löst die gestellte Aufgabe dadurch, daß der Boden mit einer Kühleinrichtung versehen wird.

Da durch diese Maßnahme der Boden zusätzlich gekühlt werden kann, frieren die sich im Bodenbereich ablagernden Absatzstoffe an und können nicht mit dem Behälterinhalt abgezogen werden. Dazu kommt noch, daß durch die angefrorenen Absatzstoffe ein Wall gebildet wird, der ein Nachrutschen von Absatzstoffen aus nicht gekühlten Bodenbereichen wirksam verhindert. Bei der Zwischenlagerung von Bier wird neben der Hefeabscheidung eine vollständige Ausflockung des Eiweißes sichergestellt, wodurch die Haltbarkeit unbegrenzt verlängert und eine Geschmacksbeeinträchtigung vermieden werden kann.

Besonders vorteilhafte Verhältnisse können dadurch sichergestellt werden, daß die Kühleinrichtung des Bodens den Auslaßtrichter konzentrisch umschließt, so daß die Absatzstoffe im Bereich des Auslaßtrichters gesammelt gehalten und abgeführt werden können. Zu diesem Zweck ist es vorteilhaft, die Kühleinrichtung des Bodens aus zwei je für sich einschaltbaren Abschnitten aufzubauen, von denen der äußere Abschnitt den inneren, im Bereich des Auslaßtrichters vorgesehenen Abschnitt umschließt. Zum Abführen eines Teiles der Absatzstoffe kann in einem solchen Fall der innere Abschnitt im Bereich des Auslaßtrichters abgeschaltet und die im Bereich dieses inneren Abschnittes angesammelte Menge an Absatzstoffen abgezogen werden, ohne die übrigen Bereiche zu beeinflussen. Der äußere Abschnitt der Kühleinrichtung bleibt ja eingeschaltet, wobei die in diesem Bereich angefrorenen Absatzstoffe festgehalten werden.

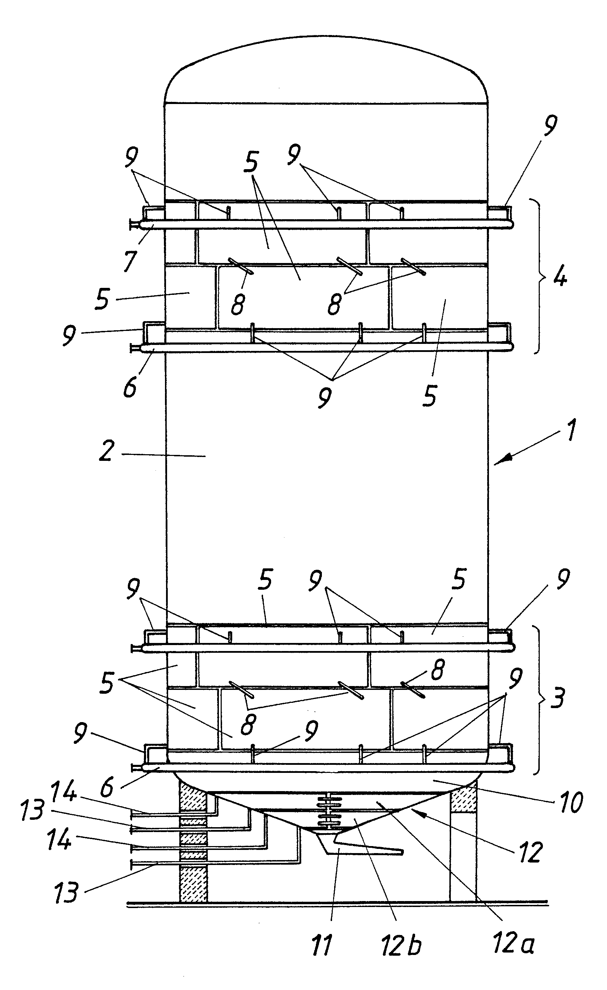

In der Zeichnung ist der Erfindungsgegenstand beispielsweise dargestellt, und zwar wird ein erfindungsgemäßer Behälter für die Zwischenlagerung von Bier in einer schematischen Ansicht gezeigt.

Der dargestellte Behälter 1 ist druckfest ausgeführt und weise einen Mantel 2 auf, der mit axialem Abstand übereinander zwei kühlbare Ringzonen 3 und 4 besitzt. Diese Ringzonen 3 und 4 werden durch am Mantel befestigte Deckbleche 5 gebildet, die mit dem Mantel 2 nicht nur entlang ihres Umfangsrandes, sondern auch rasterförmig stellenweise verschweißt sind, so daß sich zwischen dem Mantel 2 und den Deckblechen 5 Strömungskanäle für ein Kühlmittel ergeben, das über eine Verteilerleitung 6 zugeführt und über eine Sammelleitung 7 zurückgeleitet wird. Die Verbindung zwischen den Strömungskanälen der einzelnen Deckbleche 5 wird über Rohrstücke 8 erreicht. Der Anschluß an die Verteilerleitung 6 und an die Sammelleitung 7 erfolgt über Anschlußstutzen 9. Die Ringzonen 3 und 4 können folglich jeweils für sich durch eine Direktverdampfung beispielsweise von $NH_3$ gekühlt werden. Selbstverständlich kann auch jede andere Kühlung eingesetzt werden, weil es nur auf die Kühlbarkeit der Ringzonen 3 und 4, nicht aber auf die konstruktive Ausbildung der Kühleinrichtung ankommt.

Der kalottenartig gewölbte Boden 10 des Behälters 1 weist einen zentralen Auslaßtrichter 11 für die abgesetzte Hefe aus und ist mit einer Kühleinrichtung 12 versehen, die aus zwei Abschnitten 12a und 12b besteht. Diese Abschnitte 12a und 12b werden ähnlich wie die Kühlzonen 3 und 4 durch außen am Boden 10 angeschweißte Bleche gebildet, zwischen denen und dem Boden Strömungskanäle für ein Kühlmittel entstehen, das jeweils durch eine Zuleitung 13 zugeführt und durch eine Rückleitung 14 abgeleitet wird. Diese voneinander getrennte Versorgung der Abschnitte 12a und 12b der Kühleinrichtung 12 erlaubt ein wahlweises Einschalten dieser Abschnitte.

Aufgrund der zusätzlich zu den kühlbaren Ringzonen 3 und 4 vorgesehenen Kühleinrichtung 12 des Bodens 10 des Behälters 1 wird in einfacher Weise sichergestellt, daß auch das im Bodenbereich unterhalb der Ringzone 3 befindliche Bier frei von Absatzstoffen abgezogen werden kann, weil durch die intensive Kühlung des Bodens 10 das Eiweiß ausflockt und die abgesetzte Hefe am Boden anfriert. Der aus Übersichtlichkeitsgründen nicht dargestellte Bierentnahmestutzen, der im tiefsten Bodenbereich angeordnet wird, braucht daher lediglich über den im Behälter abgelagerten Hefestamm zu ragen, um den gesamten Behälterinhalt frei von Ballaststoffen entnehmen zu können. Soll ein Teil der abgesetzten Hefe und des ausgefallenen Eiweißes entnommen werden, so wird der Abschnitt 12b der Kühleinrichtung 12 abgeschaltet und die nunmehr in diesem Bereich freigegebene Menge an Absatzstoffen über den Auslaßtrichter 11 abgeführt. Dabei tritt keine Aufwirbelung der Absatzstoffe in den übrigen Bodenbereichen auf, weil der Abschnitt 12a der Kühlzone 12 eingeschaltet ist und die Absatzstoffe in seinem Bereich festhält. Ein Nachrutschen von Absatzstoffen entlang des Bodens 10 von außerhalb der Kühleinrichtung 12 wird durch den angefrorenen Wall an Absatzstoffen im Bereich des Abschnittes 12a der Kühlzone 12 wirksam unterbunden.

Durch die druckfeste Ausführungsform des Behälters 1 kann die Nachgärung des Bieres unter einer Druckbeaufschlagung beispielsweise von 0,03 bar erfolgen, wodurch der sonst erforderliche Steigraum von 22,5 bis 25 % des Gärvolumens auf maximal 15 % reduziert wird. Außerdem kann eine Nachkarbonisierung entfallen. Wird die entstehende Kohlensäure nach einer Reinigung von unten wieder in den Behälter eingeführt, so kann eine Schichtung des Behälterinhaltes wirksam verhindert werden.

Die Erfindung ist selbstverständlich nicht auf einen Behälter für das Zwischenlagern von Bier beschränkt, sondern kann bei allen Behältern für Getränke angewandt werden, bei denen einerseits die Verfahrensführung durch Kühlzonen beeinflußt werden kann und anderseits eine Beeinträchtigung des Geschmackes oder der Haltbarkeit durch Absatzstoffe unterbunden werden soll.

**Patentansprüche**

1. Stehender Behälter (1) für die Zwischenlagerung eines Getränkes, insbesondere von Bier, bestehend aus einem Boden (10) mit einem Auslaßtrichter (11) für Absatzstoffe und aus einem Mantel (2), der mit axialem Abstand voneinander zwei kühlbare Ringzonen (3, 4) aufweist, dadurch gekennzeichnet, daß der Boden (10) mit einer Kühleinrichtung (12) versehen ist.

2. Behälter nach Anspruch 1, dadurch gekennzeichnet, daß die Kühleinrichtung (12) des Bodens (10) den Auslaßtrichter (11) konzentrisch umschließt.

3. Behälter nach Anspruch 1 oder 2, dadurch gekennzeichnet, daß die Kühleinrichtung (12) des Bodens (10) aus zwei je für sich einschaltbaren Abschnitten (12a, 12b) besteht, von denen der äußere Abschnitt (12a) den inneren, im Bereich des Auslaßtrichters (11) vorgesehenen Abschnitt (12b) umschließt.